# EUROPEAN PATENT APPLICATION

(11) **EP 2 664 661 A1**
(43) Date of publication of application: **20.11.2013**
(21) Application number: 11855415.3
(22) Date of filing: 23.12.2011
(51) Int. Cl.: C10B 53/02

(54) **BIOMASS PYROLYSIS FURNACE**

(30) Priority: 13.01.2011 CN 201120008867 U
(71) Applicant: Xiao, Guoxiong, Hunan 410015 (CN)
(72) Inventor: Xiao, Guoxiong, Hunan 410015 (CN)
(74) Representative: Kramer - Barske - Schmidtchen
(86) International application number: PCT/CN2011/084566
(87) International publication number: WO 2012/094942

(57) **Abstract**

A biomass pyrolysis furnace comprises a furnace shell (23), a furnace container (6), an exhaust pipe (3), a smoke pipe (18), a recovery tower (11), and an intake pipe (7), wherein the smoke pipe (18) is installed on the furnace shell (23); the furnace container (6) is installed in the furnace shell (23); the bottom of the furnace container (6) and the periphery thereof are provided with a plurality of mesh holes; an exhaust gap (24) is provided between the furnace container (6) and the inner wall of the furnace shell (23); the smoke pipe (18) is connected to the furnace shell (23) at one end thereof, and to the recovery tower (11) at the other end thereof. The furnace shell (23) is provided, on one side at the upper end, with a flue hole and an intake pipe (7), and the exhaust pipe (3) is provided on the opposite side of the furnace shell (23). The pyrolysis furnace has a short time of biomass pyrolysis, high efficiency, high pyrolysis recovery rate of wood tar, and a simple structure, and therefore it is convenient to operate and maintain.

## Description

### FIELD OF THE INVENTION

The present invention relates to a device for the biomass fuel pyrolysis, specifically relates to a biomass pyrolysis furnace.

### BACKGROUND OF THE INVENTION

The direct-heating pyrolysis furnace is a closed furnace, such as a pyrolysis furnace of preventing oxidation (Patent No.: CN200920062938.0), the side walls and the upper side of this pyrolysis furnace are all non-porous; and the bottom of the said furnace has gap for discharging water vapor, wood vinegar, wood tar and wood gas and the like. The biomass is renewable energy source having high moisture content. At the beginning of the pyrolysis, the moisture in the biomass is evaporated firstly. After the water changing into vapor, it must pass through the thick biomass and then enter the smoke flue to be discharged. Due to blocked by the thick biomass layer, the water vapor can't pass easily. Thus, the ignition temperature rises continuously over time, up to 600°C and higher , while a large amount of the water vapor, wood vinegar gas, wood tar gas and wood gas and the like are generated, resulting in the rise of the pressure in the furnace. The wood gas is in positive proportion to the temperature and pressure, and due to poor discharging, the ignition temperature in the pyrolysis furnace further rises continuously and thus the pressure inside the furnace rises, therefore the pyrolysis in the furnace develops towards the direction of production of wood gas that is a lot of charcoal and wood tar are converted into the wood gas. The wood gas has low heating value and is a non-condensable gas, so it has to be evacuated which may cause environmental pollution and waste of energy. Even though the ignition temperature in the pyrolysis furnace reaches above 600°C, the moisture in the biomass far from the ignition place hasn't been evaporated. In order to discharge the gas, the furnace cover is often opened to lever the biomass with an iron rod. However the quickly burning of the wood tar gas and the wood gas at the top of the furnace brings danger to the operator, while a lot of flammable gas is discharged, resulting in waste of energy. Generally, it needs to be levered every four hours. The resulting amount of charcoal, wood vinegar, wood tar and wood gas is different under different pyrolysis temperatures and different pressure. At atmospheric pressure, under temperature of 300°C, 100kg of fully dried wood can produce 53kg of charcoal and only 5.6 cubic meters of wood gas with heating value of 6594KJ/M3, thus the total heating value is 36926KJ. Under temperature of 600°C, the yield of charcoal is 28.6kg, and yield of the wood gas is 14.3 cubic meters with heating value of 15198KJ/M3, thus the total heating value of wood gas is 217331KJ which is 5.8 times of that under 300°C , as described on page 32 of 〈〈Technology of Wood Waste Recycling & Utilization〉〉 published by Chemical Industry Press. Wood tar is inversely proportional to the temperature and pressure, the higher the temperature is, the less oil produced, and the higher the pressure is, the less oil produced. The pyrolysis furnace of length 1m, width 1m and height 1m generally takes more than eighty hours to evaporate the moisture in the biomass of 1 cubic meter and complete the pyrolysis to get the charcoal and oil during production process. And the water vapor and the wood tar gas are discharged from the smoke flue to condenser together, so the wood tar contains a large amount of the water vapor. The yield of the biomass charcoal and the wood tar is low. As a conclusion after several years' production, 1 ton of woody plant with 25% moisture content can produce 0.15 ton of charcoal and 2kg of wood tar. A large amount of charcoal fuel is converted into the wood gas and wood vinegar, whereas the wood gas is a low-grade fuel and generally is emitted to the air, and the commodity value of the wood vinegar is low and be seldom used. The disadvantages of such device for the pyrolysis of biomass fuel are as follows: 1. it is heavy labor and unsafe to lever every few hours; 2. long time for the pyrolysis of biomass, low production efficiency and high production cost; 3. the yield of the biomass charcoal and wood tar is few, a large amount of charcoal fuel is converted into the wood gas and wood vinegar that is a big waste of the raw material.

The recovery tower used for separating the wood tar and the wood gas is arranged vertically in the prior art, such as the recovery tower described in "the environmentally friendly pyrolysis furnace" (Patent No.CN200920062939.5) is a metal drum. The top and the bottom of the metal drum are closed, and a plurality of hollow tubes are welded therebetween, the top end of the metal drum is welded with a cooling pipe, and the lower end of the metal drum is welded with an water pipe. The smoke gas discharged from the big smoke flue passes through the hollow tube in the recovery tower, resulting in the cooling of the wood tar, the wood vinegar and the water, and the wood gas is discharged. A wood tar basin is provided below the recovery tower. In order to ensure the cooling effect, the height of the recovery tower is usually increased by 20∼50m. Since the distance between the bottom of the tower and the ground is short, once the path of the recovery tower is blocked by the wood tar, it is hard to clean the path with a tool.

### SUMMARY OF THE INVENTION

The technical problem that the present invention aims to solve is to provide a biomass pyrolysis furnace which is easy to operate, has short time of biomass pyrolysis, high efficiency and high pyrolysis recovery rate of wood tar.

The technical scheme for solving the technical problem is a biomass pyrolysis furnace comprising a furnace shell, a furnace container, a smoke pipe, a recovery tower; the smoke pipe is installed on the furnace shell, and the furnace container is installed in the furnace shell, characterized in that: the side wall of the furnace container is provided with a plurality of mesh holes, the bottom of the furnace container either is a plate or is provided with a plurality of mesh holes, an exhaust gap is provided between the furnace container and the inner wall of the furnace shell, the smoke pipe is connected to the furnace shell at one end thereof, and to the recovery tower at the other end thereof.

Further, the furnace shell is provided with an exhaust pipe communicated to the furnace container at one side thereof, the furnace shell is provided with a flue mouth and an intake pipe on one side at the upper end, and the side at which the exhaust pipe is provided is opposite to the another side at which the intake pipe is provided.

The recovery tower is inclined with an angle α with respect to the horizontal plane, and 3°≤α≤60°. The inclined arrangement is beneficial for cleaning the recovery tower.

An induced draft fan is mounted at the outlet of the recovery tower, ensuring the rapid separation of the wood tar, wood vinegar from the charcoal.

In the present invention, the furnace shell is a closed tank consisting of a shell body and a water-seal cover, the shell body is provided with a water-seal slot at the periphery of the furnace mouth, the lower end of the water-seal cover is positioned within the water-seal slot, ensuring the sealing effect of the furnace shell.

Further, the furnace shell is provided with a cooling basin which may store cooling liquid at the top thereof. The said cooling basin may be filled with water or other cooling material rapidly after the pyrolysis of the biomass, ensuring the rapid cooling of the furnace shell, and also avoiding the furnace container to be cooled directly by water which will decrease the combustion value of the charcoal.

A liquid-seal valve is provided on the intake pipe or the exhaust pipe. The liquid-seal valve is configured such that it includes the liquid-seal cover, the liquid-seal slot provided on the outer surface of the mouth of the intake pipe or the exhaust pipe, and the lower end of the liquid-seal cover is positioned within the liquid-seal slot. The liquid-seal valve can be closed when no air is needed, thus ensuring the absolute closure of the furnace cavity.

At least one ignition conduit communicated to the furnace container is provided at the top of furnace shell. A liquid-seal valve is provided at the mouth of the ignition conduit, and the liquid-seal valve is configured such that it includes a liquid-seal cover, a liquid-seal slot provided on the outer surface of the mouth of the ignition conduit, and the lower end of the liquid-seal cover is positioned within the liquid-seal slot.

In order to more effectively control the circulation of the smoke gas in the smoke pipe and exhaust pipe, the smoke pipe is provided with a liquid-seal valve. The liquid-seal valve is configured such that: it includes an external-valve body, an external-valve cover, an internal-valve body and an internal-valve cover; the external-valve body is provided with a liquid-seal slot at top end thereof, the lower end of the external-valve cover is positioned within the liquid-seal slot, the external-valve cover and the external-valve body constitute an external valve having closed cavity, and the external valve is communicated to the intake pipe; the internal-valve body is provided with the liquid-seal slot at the outer thereof, the lower end of the internal-valve cover is positioned within the liquid-seal slot, and the internal-valve cover and the internal-valve body constitute an internal valve having a closed cavity; the internal valve positioned in the closed cavity of the external valve is communicated to the outlet pipe. When need to close the liquid-seal valve, just respectively keep the lower end of the external-valve cover and the lower end of the internal-valve cover being positioned in corresponding liquid-seal slot, while the closed cavity of the external valve is communicated to the intake pipe instead of the outlet path; when need to open the liquid-seal valve, just keep the lower end of the external-valve cover being positioned in the liquid-seal slot and take off the internal-valve cover, resulting in the closed cavity of the external valve is directly communicated to the outlet pipe, thereby achieving the unblocked inlet/outlet path.

As further improvement of the present invention, the recovery tower is communicated to the wood gas pipe at the outlet thereof, communicated to the oil collecting basin through a oil pipe at the lower end thereof, communicated to the water tank through the water pipe at the top portion thereof, communicated to the water tank through another water pipe provided with water circulating pump at the lower portion thereof. The water is circularly driven by the water circulating pump in the cooling tower, the cooling effect is more distinct.

Since the furnace container is installed in the furnace shell, the bottom and side walls of the furnace container are provided with a plurality of mesh holes, an exhaust gap is provided between the furnace container and the inner surface of the wall of the furnace shell, the smoke pipe is connected to the furnace shell at one end thereof, and the recovery tower at the other end thereof.

The pyrolysis process of the biomass fuel is:
Opening the furnace cover (water-seal cover), fully placing the biomass fuel (such as plant straw) into the furnace container, closing the furnace cover, starting the induced draft fan and igniting the wood blocks, putting them through the ignition conduit of the furnace cover, closing the liquid-seal cover of the ignition conduit, the moisture is extruded from the top and the mesh holes of other five sidewalls of the furnace container following the rise of the temperature, then be discharged rapidly through the exhaust pipe through the exhaust gap between the furnace container and the furnace shell. By Keeping for 0.5 to 1.5 hours when the temperature reaches 80∼150, the moisture in the biomass cell has been evaporated completely. The biomass has been pyrolyzed into charcoal, wood tar and wood gas when the temperature of the furnace body reaches the setting temperature such as 300°C following the rise of the temperature and the speeded pyrolysis. Since the exhaust is unblocked and the temperature of the pyrolysis portion is about 300°C, only small amount of the charcoal and the wood tar is converted into the wood gas. The wood tar and the wood gas flow into the recovery tower (length 20 to 50m, with a angle α of 15 degree) through smoke pipe. The wood tar is cooled and flows out from U-shaped oil pipe, then flows into the oil collecting basin. Collecting the wood gas for baking the biomass, thus a large amount of biomass is saved. It takes three to four hours from igniting to 300°C, the speed is increased for more than twenty times compared with more than eighty hours by conventional furnace. It is proved in production that by using a furnace shell with a square of side length 1.2m and a height of 1.5m, and cubic furnace container with size of 1m*1m*1m positioned in the furnace shell, 1 ton of woody plants with moisture content of 20% can produce 0.35 ton of charcoal and 0.08 ton of wood tar during about 4 hours of pyrolysis time. The pyrolysis furnace according to the invention has short time of biomass pyrolysis, high efficiency, and high pyrolysis recovery rate of wood tar. And only small quantity of charcoal fuel is converted into the wood gas and the wood vinegar, which means small waste of the raw material. Meanwhile, there is no need to open the furnace cover and lever the biomass during whole pyrolysis process, so the operation is safe and labor-saved.

Following is further description of the present invention with reference to the drawings.

### BRIEF DESCRIPTION OF THE DRAWINGS

Figure 1 is a structural diagram of an embodiment of the present invention;
Figure 2 is a top view of figure 1;
Figure 3 is a structural diagram of an embodiment of the furnace container of the present invention;
Figure 4 is a structural diagram of second embodiment of the furnace container of the present invention;
Figure 5 is a structural diagram of third embodiment of the furnace container of the present invention;
Figure 6 is a structural diagram of the liquid-seal valve of the present invention;
Figure 7 is a structural diagram of the water-seal cover of the present invention;
Figure 8 is a top view of figure 7;
Figure 9 is a structural diagram of another embodiment of the liquid-seal valve of the present invention.

In the drawings:
1 thermometer;
2 8, 19 - switch;
3 exhaust pipe;
4 U-shaped water-seal slot;
5 water-seal cover;
6 furnace container;
7 intake pipe;
9 wood gas pipe;
10 induced draft fan;
11 recovery tower;
12 15 - water pipe;
13 water tank;
14 water pump;
16 U -type oil pipe;
17 oil collecting basin;
18 smoke pipe;
20 thermometer;
21 angle iron;
22 metal mesh;
23 furnace shell;
24 exhaust gap;
25 external-valve cover;
26 external-valve body;
27 internal-valve cover;
28 internal-valve body;
29 30, 33 - liquid-seal slot;
31 cooling basin;
32 liquid-seal cover;
34 ignition conduit.

### DETAILED DESCRIPTION OF THE EMBODIMENTS

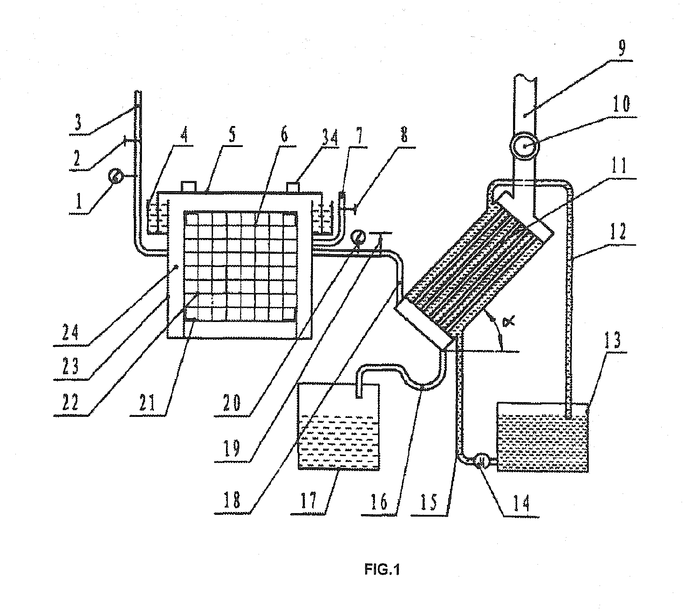

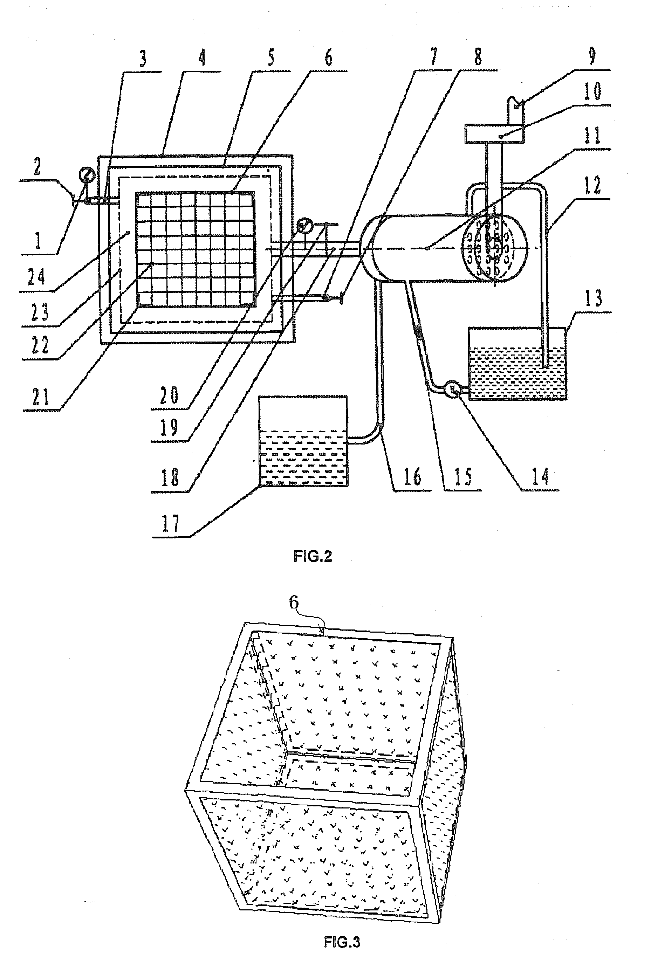

A biomass pyrolysis furnace as shown in figure 1 and figure 2, comprises a furnace shell 23, a furnace container 6, an exhaust pipe 3, an intake pipe 7, a smoke pipe 18, a recovery tower 11. The smoke pipe 18 is installed on the furnace shell 23, and the furnace container 6 is installed in the furnace shell 23. The bottom of the furnace container 6 and periphery thereof are provided with a plurality of mesh holes. An exhaust gap 24 which may be used for discharge of vapor is provided between the furnace container 6 and the inner surface of the wall of the furnace shell 23. The smoke pipe 18 is connected to the furnace shell 23 at one end thereof, and to the recovery tower 11 at the other end thereof.

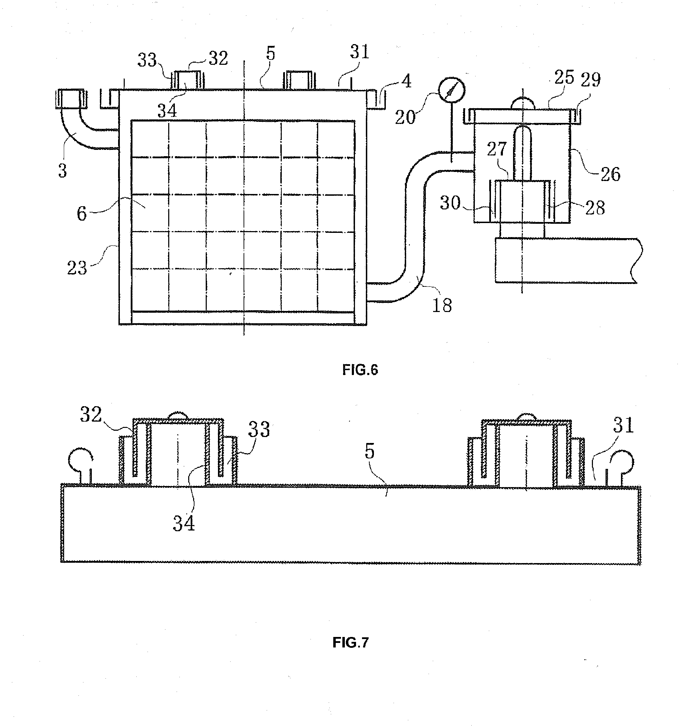

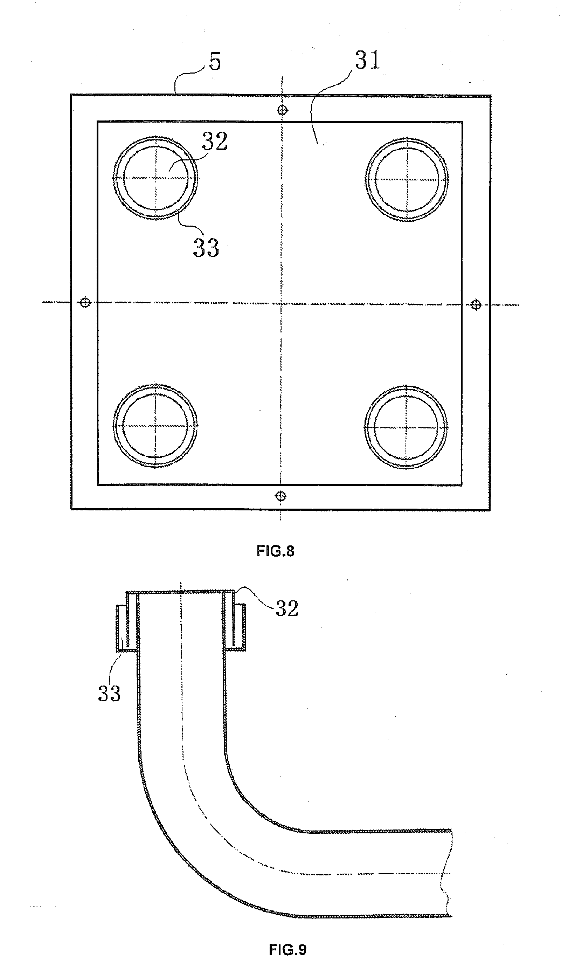

The pyrolysis furnace shell 23 may be a six-side closed tank comprising a shell body and a water-seal cover 5. At its periphery, the furnace mouth of the shell body is provided with an U-shaped water-seal slot 4 which is full of water, as shown in figure 7 and 8. The water-seal cover 5 is a cover flanging down at periphery, and the periphery is embedded in the U-shaped water-seal slot 4, thereby ensuring the sealing effect of the furnace shell. The furnace shell 23 is provided, on one side at the upper end, with a smoke pipe 18 and an intake pipe 7, and the exhaust pipe 3 is provided on the opposite side of the furnace shell 23. The smoke pipe 18 is provided with a switch 19 and a thermometer 20, the intake pipe 7 is provided with a switch 8, and the exhaust pipe 3 is provided with a thermometer 1 and a switch 2. The furnace shell 23 is provided, at the top portion, with four ignition conduits 34 communicated to the furnace container, the ignition conduit 34 is provided with a liquid-seal valve at the mouth thereof. The liquid-seal valve structurally includes a liquid-seal cover 32, which is a cover flanging down at periphery, the liquid-seal slot 33 is provided on the outer surface of the wall of the ignition conduit, and the lower end of the liquid-seal cover 32 is positioned in the liquid-seal slot 33. Opening the liquid-seal cover 32 when igniting is needed, and the liquid-seal cover 32 is closed with its lower end embedded in the liquid-seal slot 33 after igniting in the ignition conduit, thereby closing the liquid-seal valve to prevent leakage of smoke gas.

As shown in figure 6, the switch 2, 8, 19 preferred are the good-closed liquid-seal valve. The liquid-seal valve is configured such that it includes an external-valve body 26, an external-valve cover 25, an internal-valve body 28 and an internal-valve cover 27, the external-valve cover 25 and the internal-valve cover 27 both are covers flanging down at periphery, the external-valve body 26 is provided, at top portion thereof, with a liquid-seal slot, the lower end of the external-valve cover 25 is positioned in the liquid-seal slot 29, and the external-valve cover 25 and the external-valve body 26 constitute an external valve with a closed cavity which is communicated to the intake pipe; as well as the internal-valve body 28 is provided, at the exterior thereof, with the liquid-seal slot in which the lower end of the internal-valve cover 27 is positioned, the internal-valve cover 27 and the internal-valve body 28 constitute an internal valve with closed cavity; and the internal valve positioned in the closed cavity of the external valve is communicated to the outlet pipe. When the liquid-seal valve is needed to be closed, just keep the lower end of the external-valve cover 25 and the lower end of the internal-valve cover 27 being respectively positioned in corresponding liquid-seal slot, While the closed cavity of the external valve is communicated to the intake pipe instead of the outlet path; when the liquid-seal valve is needed to be open, just keep the lower end of the external-valve cover 25 being positioned in the liquid-seal slot and take off the internal-valve cover 27, resulting in the closed cavity of the external valve is directly communicated to the outlet pipe, thereby achieving the unblocked inlet/outlet path.

Certainly, the switch 2, 8 also may be in following structure. As shown in figure 9, the pipe is provided, at the mouth thereof, with a liquid-seal slot 33 and a liquid-seal cover 32 which is a cover flanging down at periphery. Sealing is realized when the lower end of the liquid-seal cover is positioned in the liquid-seal slot 33, and if the liquid-seal valve is needed to be open, just take off the liquid-seal cover 32.

Furthermore, the furnace shell 23 is provided, at top end thereof, with a cooling basin 31 for storage of cooling water, the cooling basin 31 may be a basin with opening at the top, which is formed by the furnace shell 23 and four steel plates welded on the top surface of the furnace shell 23, the cooling basin 31 may be filled with water rapidly after the pyrolysis of the biomass, ensuring the rapid cooling of the furnace shell 23, which is faster than natural air cooling, and can also avoid the furnace container 6 to be cooled directly by water which will decrease the combustion value of the charcoal.

The recovery tower 11 is inclined with a angle α with respect to the horizontal plane, and 3°≤α≤60°. There is a distance between the bottom of the tower and the ground, which is good for using a tool to clear the path whenever the path in the recovery tower is blocked by the wood tar.

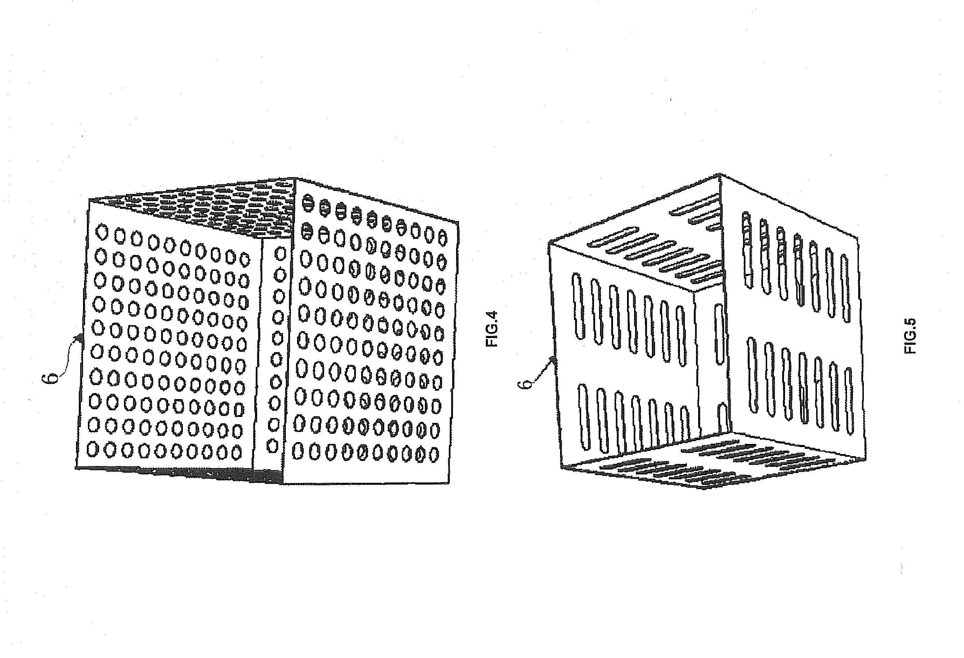

The furnace container 6 is positioned in the furnace shell 23, as shown in figure 3, the bottom and the side wall of the furnace container 6 are all formed by metal mesh 22, and the mouth of the furnace container 6 is opened. Each sidewall is welded by an angle irons 21, and the metal mesh 22 is welded on the angle iron 21. The bottom of the furnace container 6 may be made of steel plate if size of the biomass granule is relative smaller. Certainly, the furnace container 6 may also be in the structures shown in figure 4 and 5.

The switch 19 is connected to the recovery tower 11 which is a metal drum and provided with a flange cover at the two ends respectively, Two mental plates are welded respectively at the positions about 50cm from the mouths of the flanges. Each of the metal plates is provided with a plurality of holes, and a plurality of metal hollow tubes are welded between the plurality of holes on one metal plate and the plurality of holes on the other plate. The metal drum is welded with a water pipe 12 at the upper end thereof, and welded to a water pipe 15 at the lower end. One end of the water pipe 12 is inserted into a water tank 13, and the water tank 13 is connected to the water pipe 15 through a water pump 14. The upper end of the recovery tower 11 is connected to the induced draft fan 10 which is connected to the wood gas pipe 9 at the wind outlet. The recovery tower 11 is provided with an U-shaped oil pipe 16 at the lower end, and an oil collecting basin 17 is provided below the U-shaped oil pipe 16. When the recovery tower 11 is blocked by the wood tar, the wood tar may be removed by opening the flange cover at the lower end of the recovery tower 11 and inserting a steel fiber into the metal hollow tubes.

Some dozens of smoke pipes 18 for the pyrolysis furnace can be parallelly connected with each other and then connected to the recovery tower 11.

The pyrolysis process of the biomass fuel is as follows:
Opening the water-seal cover 5, fully placing the biomass fuel (such as plant straw) in the furnace container 6, closing the water-seal cover 5, igniting at least one of wood blocks and putting them into the furnace container 6 from the ignition conduit 34;
Closing the liquid-seal cover 32 of the ignition conduit 34, filling the U-shaped water-seal slot 4 with water, then opening switch 2, at this time the moisture is extruded from the top and the mesh holes of other five sidewalls of the furnace container, and then is discharged through the exhaust pipe 3;
Regulating the switch 8 to control the volume of incoming air to prevent extinguishment and extra air oxidation;
Keeping for 0.5 to 1.5 hours when the temperature of the thermometer 1 reaches 80∼150 following the rise of the temperature, then closing the switch 2 and opening the switch 19, starting the induced draft fan 10, starting the water pump 14, regulating the switch 8 to control the volume of incoming air to prevent extra air oxidation, the wood tar and the wood gas flow into the recovery tower 11 from the smoke pipe 18, the cold water flows into the recovery tower 11 through water pipe 15, and flows out from the water pipe 12 of the recovery tower 11.

The wood tar is cooled and flows out from U-shaped oil pipe 16, then flows into the oil collecting basin 17 for storage. A large amount of biomass charcoal, wood tar, wood vinegar and a small quantity of wood gas and the like have been pyrolyzed from the biomass when the reading of the thermometer 20 reaches about 300°C.

The comparison between the pyrolysis of biomass fuel in the pyrolysis furnace according to the invention and that in the conventional pyrolysis furnace is shown in the following table.

| 1 ton of wooden biomass with 25% moisture content, after pyrolysis, comparison between the yields of the charcoal and wood tar in two kinds of pyrolysis furnaces | | |
|---|---|---|
| Product | Yield of charcoal | Yield of wood tar |
| Conventional furnace | 0.15 ton | 0.02 ton |
| This pyrolysis furnace | 0.35 ton | 0.08 ton |

As can be seen from the table, after the pyrolysis of one ton of biomass fuel, the yields of the charcoal and the wood tar in this pyrolysis furnace are greatly higher than those in the conventional pyrolysis furnace.

Although the detailed content have been illustrated with the foregoing embodiments, it should be understood that these embodiments are only used for more clearly explaining the present invention, and not intended to limit the range of the present invention. After reading the present invention, various equivalent modifications can be made by those skilled in the art and should fall in the scope of the invention defined by the appended claims of this application.

## Claims

1. A biomass pyrolysis furnace, comprising a furnace shell, a furnace container, a smoke pipe, a recovery tower; wherein the smoke pipe is installed on the furnace shell, and the furnace container is installed in the furnace shell, **characterized in that** the side wall of the furnace container is provided with a plurality of mesh holes; the bottom of the furnace container either is a plate or is provided with a plurality of mesh holes; an exhaust gap is provided between the furnace container and the inner surface of the wall of the furnace shell; the smoke pipe is connected to the furnace shell at one end thereof, and the to the recovery tower at the other end thereof.

2. The biomass pyrolysis furnace according to claim 1, **characterized in that**, the furnace shell is provided with an exhaust pipe communicated to the furnace container at one side thereof, the furnace shell is provided with a flue mouth and an intake pipe at the upper end on another side thereof, and the side at which the exhaust pipe is provided is opposite to the another side at which the intake pipe is provided.

3. The biomass pyrolysis furnace according to claim 1 , **characterized in that** , the recovery tower is inclined with an angle α with respect to the horizontal plane, and 3°≤α≤60°.

4. The biomass pyrolysis furnace according to claim 1, **characterized in that**, an induced draft fan is mounted on the recovery tower at the outlet portion thereof.

5. The biomass pyrolysis furnace according to claim 1, **characterized in that**, the furnace shell is a closed tank consisting of a shell body and a water-seal cover, the shell body is provided with a water-seal slot at the periphery of the furnace mouth, the lower end of the water-seal cover is positioned within the water-seal slot.

6. The biomass pyrolysis furnace according to claim 1 or 5, **characterized in that**, the furnace shell is provided with a cooling basin which can store cooling liquid at the top end thereof.

7. The biomass pyrolysis furnace according to any one of claims 1 to 5, **characterized in that**, the smoke pipe is provided with a liquid-seal valve, the liquid-seal valve is configured such that it includes an external-valve body, an external-valve cover, an internal-valve body and an internal-valve cover, the external-valve body is provided with a liquid-seal slot at top end thereof, the lower end of the external-valve cover is positioned within the liquid-seal slot, the external-valve cover and the external-valve body constitute an external valve having closed cavity, and the external valve is communicated to the intake pipe; the internal-valve body is provided with the liquid-seal slot at the outer thereof, the lower end of the internal-valve cover is positioned within the liquid-seal slot, and the internal-valve cover and the internal-valve body constitute an internal valve having a closed cavity; the internal valve positioned in the closed cavity of the external valve is communicated to an outlet pipe.

8. The biomass pyrolysis furnace according to claim 2, **characterized in that**, the intake pipe or exhaust pipe is provided with a liquid-seal valve, the liquid-seal valve is configured such that it includes a liquid-seal cover and a liquid-seal slot provided at the outer surface of the mouth of the intake pipe or the exhaust pipe, the lower end of the liquid-seal cover is positioned within the liquid-seal slot.

9. The biomass pyrolysis furnace according to any one of claims 1 to 5, **characterized in that**, at least one ignition conduit communicated to the furnace container is provided at the top end of furnace shell, a liquid-seal valve is provided at the mouth of the ignition conduit, the liquid-seal valve is configured such that it includes the liquid-seal cover, the liquid-seal slot provided on the outer surface of the mouth of the ignition conduit, and the lower end of the liquid-seal cover is positioned within the liquid-seal slot.

10. The biomass pyrolysis furnace according to any one of claims 1 to 5, **characterized in that**, the recovery tower is communicated to a wood gas pipe at the outlet thereof, communicated to the oil collecting basin through a oil pipe at the lower end thereof, communicated to the water tank through the water pipe at the top portion thereof, communicated to the water tank through another water pipe provided with water circulating pump at the lower portion thereof.
